# EUROPÄISCHE PATENTSCHRIFT

(11) **EP 2 005 915 B1**
(45) Veröffentlichungstag und Bekanntmachung des Hinweises auf die Patenterteilung: **21.03.2012**
(21) Anmeldenummer: 07012136.3
(22) Anmeldetag: 21.06.2007
(51) Int. Cl.: A61C 8/00

(54) **Dentalimplantat**
Dental implant
Implant dentaire

(43) Veröffentlichungstag der Anmeldung: 24.12.2008
(73) Patentinhaber: SIC Invent AG, 4055 Basel (CH)
(72) Erfinder: Zipprich, Holger, 64283 Darmstadt (DE); Witt, Andreas, 34305 Niedenstein (DE)
(74) Vertreter: Tergau & Walkenhorst

(56) Entgegenhaltungen:
- EP-A- 0 707 835
- DE-A1- 10 129 684
- DE-A1-102005 005 402

## Beschreibung

Die Erfindung betrifft ein Dentalimplantat mit einem in einen Kieferknochen einbringbaren Pfostenteil und mit einem diesem zugeordneten Aufbauteil, an das ein Zahnersatzstück anbringbar ist.

Ein Dentalimplantat gemäß dem Oberbegriff von Anspruch 1 ist aus der DE-A-10129684 bekannt.

Dentalimplantate sind in vielfältigen Formen bekannt. Sie werden meist durch Einschrauben an Stelle eines extrahierten oder ausgefallen Zahnes in den Kieferknochen eingesetzt, um dort nach einer Einheilphase von drei bis vier Monaten ein als Zahnersatz dienendes prothetisches Aufbauteil oder eine Krone zu halten. Dazu ist ein derartiges Zahnimplantat üblicherweise als geeignet geformter Metallkörper ausgebildet und in der Art eines Stiftes geformt und weist am apikalen Ende ein zumeist selbstschneidendes Schraubengewinde auf, mit welchem der Stift in das entsprechend präparierte Implantatbett eingesetzt wird.

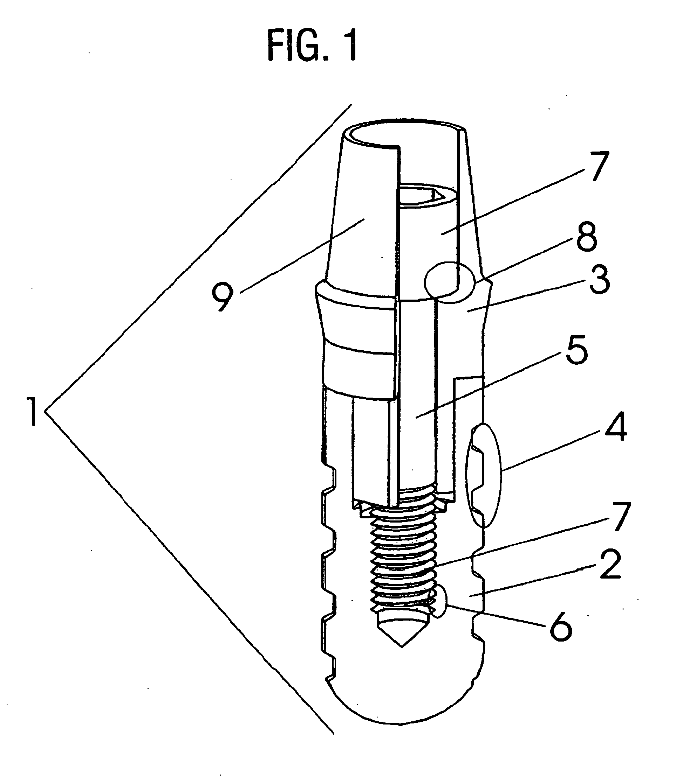

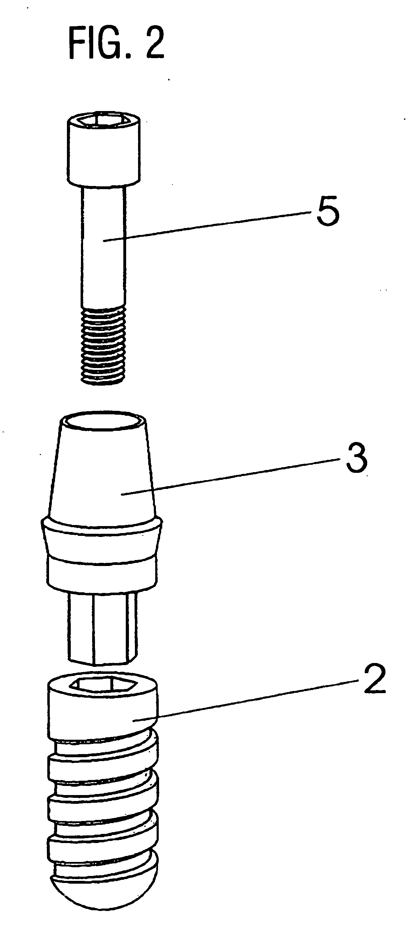

Ein Beispiel für ein Dentalimplantat der oben genannten Art ist in Fig. 1 in einer teilweisen Ansicht und teilweise in einem axialen Schnitt und in Fig. 2 als Explosionszeichnung gezeigt. Das zweiteilige Dentalimplantat 1 umfasst ein Pfostenteil 2 und ein Aufbauteil 3. Das Pfostenteil 2 besteht ebenso wie das Kopf- oder Aufbauteil 3 aus Metall oder einer Keramik, und zwar insbesondere aus Titan, einer Titanlegierung, einer titanhaltigen Legierung, einer Zirkonoxid-, Aluminiumoxidkeramik oder einer Keramik, die entweder Zirkonoxid oder Aluminiumoxid beinhaltet. Das Pfostenteil 2 ist von außen mit einem Gewinde 4 versehen, welches als selbst schneidendes oder als nicht selbst schneidendes Gewinde ausgeführt sein kann. Die Steigung des Gewindes kann gleichmäßig oder veränderlich ausgeführt sein. Die äußere Gestalt des Pfostenteils 2 kann auch ohne Gewinde mit und ohne mechanische Retentionshilfen ausgeführt sein. Über eine Verbindungsschraube 5 werden das Pfostenteil 2 und das Aufbauteil 3 miteinander verschraubt. Das Gewinde der Verbindungsschraube 5 wird dazu in ein Innengewinde 6 des Pfostenteils 2 eingeschraubt. Der Schraubenkopf 7 der Verbindungsschraube 5 presst beim Einschrauben der Verbindungsschraube 5 über die Stirnsenkung 8 des Aufbauteils 3 das Aufbauteil 3 auf das Pfostenteil 2.

Das Pfostenteil 2 wird in einem entsprechend aufbereiteten Implantatbett des Kieferknochens verankert. Die Gewindekonstruktion gewährleistet dabei eine hohe Primärstabilität und eine gleichmäßige Weiterleitung der bei Kaubelastung auftretenden Kräfte in den Kieferknochen. Das Aufbauteil 3 wird am oberen Bereich 9 mit einer Krone, einer anderen prothetischen Versorgung oder dergleichen in an sich bekannter Weise verbunden. Diese Verbindung kann als Verschraubung, Klemmung, konische Selbsthemmung, Unterdruck, Magnet, Kugelkopfsystem, Zementierung, Verklebung oder dergleichen ausgeführt sein.

Um einer Rotation oder Verdrehung zwischen dem Aufbauteil 3 und dem Pfostenteil 2 durch äußere Kräfte (meist bedingt durch die Kaubelastung) entgegen zu wirken, wird entweder eine mechanische Indizierung in Form einer mechanischen Sperre verwendet oder die Flächenpressung zwischen Aufbauteil 3 und dem Pfostenteil 2 geeignet gewählt.

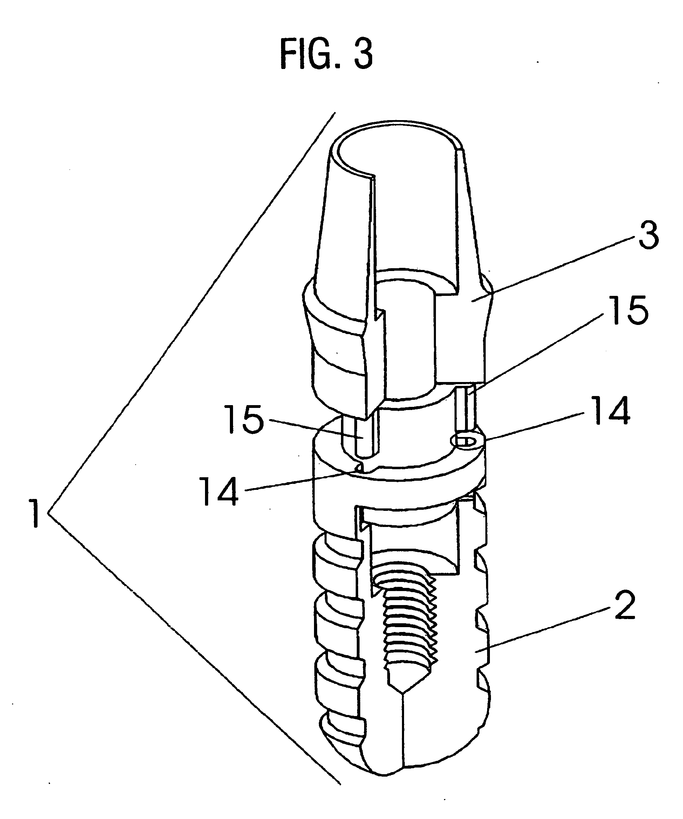

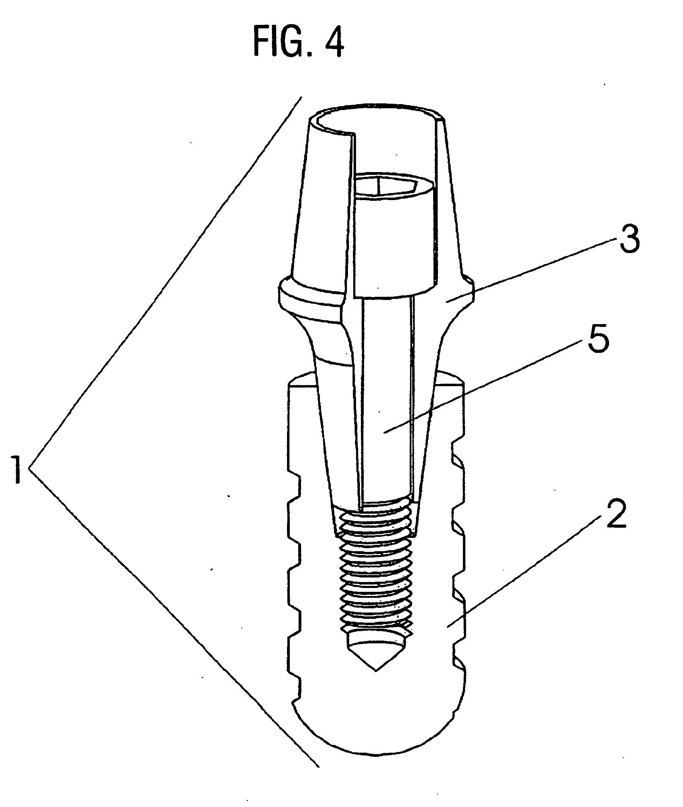

Die zur Indizierung und zur Vermeidung der Rotation des Aufbauteils 3 auf dem Pfostenteil 2 verwendete mechanische Sperre kann in verschiedenen Varianten ausgeführt sein. Im Beispiel nach den Fig. 1 und 2 ist dazu ein Innensechskant im Postenteil 2 und einen Außensechskant am Aufbauteil 3 vorgesehen, wobei die Ausführung als Außen- und Innensechskant auch anders herum erfolgen kann. Die Anzahl der Kanten eines solchen Kantensystems kann variieren. Weiterhin können die Ecken solcher Kantsysteme mit einem Radius versehen sein. Als weitere Ausführungen sind Torx und Vielzahnsysteme mit variierender Elementanzahl, variierender Geometrie bekannt. Darüber hinaus sind in alternativer Ausgestaltung, wie in Fig. 3 gezeigt, Indizierungen mittels Einfräsungen 14 im Pfostenteil 2 und herausragender Elemente 15 oder Nocken am Aufbauteil 3 bekannt. Dabei erfolgt die Vermeidung der Rotation zwischen dem Pfostenteil 2 und dem Aufbauteil 3 über die Anpresskraft der Verbindungsschraube. Zusätzlich oder alternativ kann die Verbindung zwischen dem Pfostenteil 2 und dem Aufbauteil 3 meist konisch ausgeführt sein. Insbesondere handelt es sich dabei um Ausführungen der in Fig. 4 dargestellten Art, die auf Grund des Konuswinkels und der Oberflächenreibung zwischen den konischen Kontaktflächen des Pfostenteils 2 und des Aufbauteils 3 beim Anziehen der Verbindungsschraube 5 über die konischen Kontaktstellen zwischen dem Pfostenteil 2 und dem Aufbauteil 3 als konische Hemmung bzw. konische Selbsthemmung ausgeführt sind.

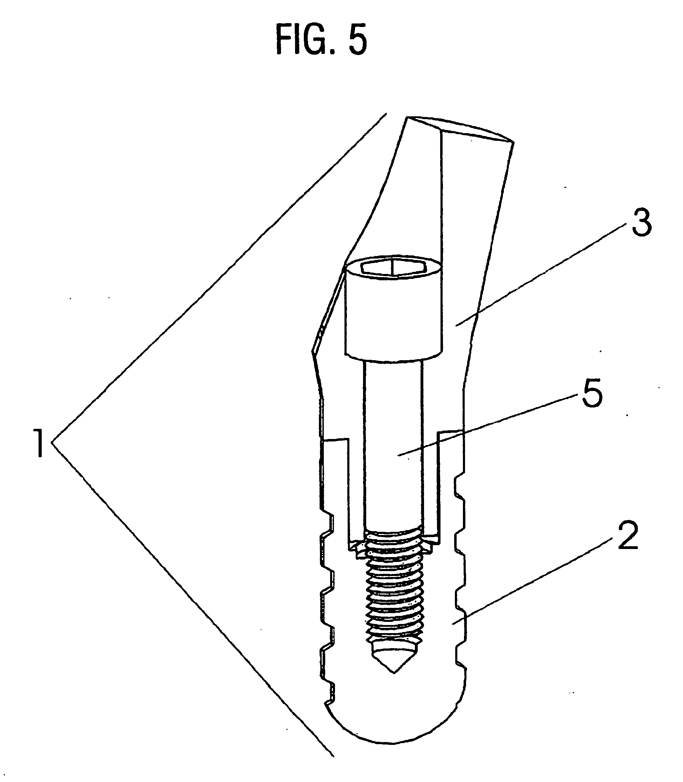

Abhängig von der Insertionsstelle (Frontzahn-, Seitenzahnbereich, Unterkiefer, Oberkiefer), der Knochensubstanz, der Restbezahnung, Verlauf und Position der Gefäße und Nerven ist es dem Behandler nicht immer möglich, die Bohrung für das Pfostenteil/Implantat übereinstimmend mit der Achse der prothetischen Versorgung (Krone oder dergleichen) zu bohren. Daraus folgt, dass ein gerade ausgeführtes Pfostenteil/Implantat und ein gerade ausgeführtes Aufbauteil nicht den anatomischen Gegebenheiten des Patienten genügen. Um diesem Problem entgegen zu wirken, werden abgewinkelte Aufbauteile verwendet (Fig. 5). Man bezeichnet abgewinkelte Aufbauteile auch als angulierte Aufbauteile. Fig. 5 zeigt ein Dentalimplantat 1 mit einem Pfostenteil 2 und einem abgewinkelten/angulierten Aufbauteil 3, wobei das Pfostenteil 2 und das angulierte Aufbauteil 3 über die Verbindungsschraube 5 miteinander verschraubt sind.

Üblicherweise liegt dieser Winkel zwischen 10° und 30°. Nach der Insertion, vorzugsweise nach der Einheilung der Pfostenteile, müssen zur Anfertigung der Krone, Brücke oder dergleichen die räumlichen und geometrischen Informationen der Restbezahnung (z. B. Antagonisten, mesial und distal der Insertionsstelle stehende Zähne), der Schleimhaut und des Pfostenteils/Implantats oder des montierten Aufbauteils erfasst werden. Diese räumlichen und geometrischen Informationen sind notwendig, um die Krone, Brücke oder dergleichen passgenau und anatomisch optimiert zu fertigen. Zu diesem Zweck wird eine Abformung, vorzugsweise aus Silikon oder einem anderen dentalen Abformmaterial, von der Mundsituation angefertigt. Diese Abformung wird vorzugsweise mit Gips oder einem anderen dentalen Modellwerkstoff ausgegossen. Dieses Gipsmodell ist ein Duplikat der Mundsituation des Patienten / der Patientin. Es liefert dem Zahnarzt und oder dem Zahntechniker die Informationen über die Position der Restbezahnung, der Schleimhaut und der inserierten Pfostenteile/Implantate.

Zur Verbesserung der Übertragung von Position und Geometrie der inserierten Pfostenteile/Implantate werden vorzugsweise spezielle Abformpfosten aus Metall und oder Kunststoff auf die inserierten Pfostenteil/Implantat gesteckt und oder geschraubt. Anschließend wird die Abformung im Mund vorzugsweise mit Silikon angefertigt. Nach der Aushärtung des Abformmaterials verbleiben der Abformpfosten bei der Andruckentnahme entweder auf dem Implantat oder werden mit der Abformung entnommen. Beim Ausgießen der Abformung muss der Abformpfosten/Aufbaupfosten in der Abformung platziert werden und mit einem Laborimplantat verbunden sein. Dieses Laborimplantat besitzt bezüglich der Verbindung und geometrisch in Richtung des Abformpfostens / Aufbaupfostens gleiche oder ähnliche geometrische Gestalt wie das inserierte Pfostenteil/Implantat. Nach dem Ausgießen der Abformung mit integriertem Abformpfosten/Aufbaupfosten und integriertem Laborimplantat erhält man ein Gipsmodell mit eingegossenem Laborimplantat.

Besitzt das verwendete Implantatsystem eine Indizierung, wurde diese vom Patientenmund auf das Gipsmodell übertragen. Basierend auf diesem Gipsmodell wird die prothetische Versorgung des Implantats / der Implantate geplant und gefertigt. Hierbei nimmt die rotatorische Position des Aufbauteils auf dem Implantat eine entscheidende Rolle ein. Besitzt das verwendete Implantatsystem eine Indizierung, so sind die Positioniermöglichkeiten des Aufbauteils auf dem Laborimplantat begrenzt. Bei einer Sechskantverbindung sind es sechs Positioniermöglichkeiten. Bei einem Implantatsystem ohne Indizierung können alle Positionen zwischen 0° und 360° verwendet werden. Nach der Fertigung erfolgt meistens eine Anprobe im Patientenmund. Bei dieser Anprobe oder der endgültigen Eingliederung des prothetischen Zahnersatzes muss der Behandler das Aufbauteil / die Aufbauteile und alle weiteren prothetischen Elemente im Patientenmund in der gleichen Position wie auf dem Gipsmodell eingliedern.

Ist das inserierte Implantatsystem mit einer Indizierung ausgestattet, hat der Behandler eine begrenzte Anzahl an Wahlmöglichkeiten, um die gewünschte Position zu ermitteln. Existiert bei dem verwendeten Implantatsystem keine Indizierung, kann der Behandler nicht den Vorteil einer begrenzten Positionierung zur Ermittlung der gewünschten Position nutzen. Der Behandler muss die Information/-en über die gewünschte/-n rotatorische/-n Position/-en des/der Aufbauteils/- teile auf dem/den Implantat/-en auf einem anderen Weg ermitteln. Hierfür werden meist individuelle Schlüssel vom Zahntechniker angefertigt. Der individuelle Schlüssel wird auf die Aufbauteile / das Aufbauteil montiert und als gesamtes unter Zuhilfenahme der benachbarten Zähne und oder der benachbarten anatomischen Struktur auf die Implantate aufgesetzt. Nach dem Befestigen der Aufbauteile auf den Implantaten (Schrauben, Zementieren, etc.) kann der individuelle Schlüssel entfernt werden und die restliche Eingliederung der prothetischen Komponenten erfolgen. Schlussfolgernd lässt sich sagen, dass es zur optimierten Fertigung der prothetischen Komponenten vorteilhaft ist, wenn der Zahntechniker nicht durch eine Indizierung in der Verbindung des Aufbauteils und des Implantates in der Wahl der rotatorischen Positionierung eingeschränkt ist. Muss aber ein individueller Schlüssel angefertigt werden, ist dies für den Zahntechniker mit Aufwand und Kosten verbunden. Weiterhin ist es für den Behandler beim Eingliedern mit einem höheren Aufwand verbunden. Für den Zahnarzt ist es günstiger, wenn die Anzahl der Positioniermöglichkeiten des Aufbauteils auf dem Implantat so niedrig wie möglich ist. Angenehm sind 8-12 Möglichkeiten, vorteilhaft 3-5 Möglichkeiten, insbesondere aber 1-2 Positioniermöglichkeiten.

Es ist daher wünschenswert, dass der Zahntechniker eine rotatorische Bewegungsfreiheit des / der angulierten oder nicht angulierten Aufbauteils /-teile von 360° stufenlos nutzen kann, aber der Zahnarzt ohne Hilfsmittel für das Eingliedern des einteiligen oder mehrgeteilten Aufbauteils in der Art einer Indizierung nur eine geringe Zahl Positioniermöglichkeit auf dem Pfostenteil im Patientenmund hat, so dass ein aufwendiges Ausrichten und Positionieren während der eigentlichen Behandlung, also im Patientenmund, entfallen kann.

Der Erfindung liegt daher die Aufgabe zugrunde, ein Dentalimplantat der oben genannten Art anzugeben, welches es bei insgesamt gering gehaltenem Infektionsrisiko dem Zahntechniker erlaubt, alle Positionen zwischen 0° und 360° zu verwenden, und es dem Behandler gleichzeitig ermöglicht, ohne Verwendung von Hilfswerkzeugen (z.B. individueller Schlüssel) die oben beschriebenen Vorteile einer Indizierung wahrzunehmen.

Diese Aufgabe wird erfindungsgemäß gelöst mit den Merkmalen des Anspruchs 1. Dabei ist vorgesehen, dass das Dentalimplantat ein zumindest zweiteilig ausgeführtes Aufbauteil aufweist, dass das in den Kieferknochen implantierte Pfostenteil mit dem Zahnersatzteil verbindet. Das Aufbauteil umfasst dabei einerseits ein erstes Aufbauteilstück, das in Längsrichtung des Pfostenteils gesehen in einen in diesem angeordneten Aufnahmekanal einschiebbar ist, und andererseits ein zweites Aufbauteilstück zur Montage des Zahnersatzstückes. Das erste und das zweite Aufbauteilstück sind dabei in einem Kontaktbereich miteinander in Kontakt bringbar, in dem beide Komponenten einen im wesentlichen kreisförmigen Querschnitt aufweisen, wohingegen die Innenkontur des Aufnahmekanals ebenso wie die daran angepasste Außenkontur der ersten Aufbauteilstückes im Querschnitt eine mehrzählige Symmetrie aufweisen.

Durch diesen Aufbau ist erreicht, dass nach geeigneter Ermittlung der gewünschten Orientierung oder rotatorischen Ausrichtung des Aufbaus zunächst im Labor, also beispielsweise vom Zahntechniker, die Feinjustierung oder rotatorische Ausrichtung durch geeignete Verdrehung zwischen erstem und zweitem Aufbauteilstück vorgenommen werden kann. Durch die kreisförmigen Querschnitte der Komponenten im entsprechenden Kontaktbereich ist dabei eine im wesentlichen freie Verdrehbarkeit dieser Komponenten gegeneinander gewährleistet, so dass jede beliebige gewünschte Orientierung eingestellt werden kann. Anschließend können die solchermaßen korrekt ausgerichteten Aufbauteilstücke noch im Labor und somit außerhalb des Patientenmundes geeignet zueinander fixiert werden, so dass die bereits eingestellte Orientierung auch für die weiteren Bearbeitungsschritte erhalten bleibt. Anschließend wird in einem späteren Arbeitsschritt, insbesondere vom Zahnarzt, das gesamte Aufbauteil mit dem bereits in den Kieferknochen implantierten Pfostenteil verbunden, wobei das erste Aufbauteilstück in den zugeordneten Aufnahmekanal im Pfostenteil eingeschoben wird. Durch die mehrzählige Symmetrie des Querschnitts des Aufnahmekanals und des zugeordneten Segments des ersten Aufbauteils ist dabei sichergestellt, dass bei diesem Einschieben lediglich eine geringe Anzahl von Orientierungen möglich ist, so dass schnell und ohne großen Aufwand mit einer Feinjustierung die korrekte Ausrichtung gewährleistet ist. Die Behandlungsphase im Patientenmund kann damit besonders kurz gehalten werden.

Durch die mehrteilige Ausführung des Aufbauteils ist somit eine Entkopplung einer frei wählbaren Rotation hinsichtlich der endgültigen Ausrichtung der Längsrichtung des für die Montage der Krone oder des Zahnersatzes vorgesehenen Montagebereichs des Aufbauteils durch den Zahntechniker einerseits von einer Richtungsvorgabe des einmal vorgefertigten Zwischenprodukts für die endgültige Anbringung des Aufbauteils am bereits im Patientenmund implantierten Pfostenteils durch den Zahnarzt andererseits ermöglicht. Unter voller Ausnutzung der dadurch gegebenen Rotationsfreiheit zwischen den beiden Aufbauteilstücken kann der Zahntechniker somit nach für ihn optimierten Verhältnisse eine Ausrichtung der Komponenten vornehmen. Anschließend werden die Aufbauteilstücke zueinander fixiert, so dass die vom Zahntechniker vorgenommene Ausrichtung erhalten bleibt. Bei der endgültigen Anbringung am Pfostenteil im Patientenmund, die aufgrund der formschlüssigen Anpassung des dort vorgesehenen Kontaktstifts an die zugeordnete Formausnehmung nur in einer vorgegebenen Orientierung möglich ist, kann der Zahnarzt sodann ohne nennenswerten Justierungsaufwand das fertige Dentalimplantat mit der vorgesehenen Ausrichtung herstellen.

Zudem ist das Dentalimplantat gezielt dafür ausgelegt, ein Eindringen von Bakterien, Verschmutzungen oder dergleichen in den Bereich der mechanischen Kontaktstellen der einzelnen Aufbauteilstücke zu verhindern oder zumindest zu begrenzen. Dazu ist das zweite Aufbauteilstück durch geeignete Formgebung derart ausgestaltet, dass sich bei montiertem Dentalimplantat im Zusammenwirken mit dem Pfostenteil eine das erste Aufbauteilstück und den diesem zugeordneten Aufnahmekanal umschließende Kapselung oder Umhüllung ergibt. Zur Bildung dieser Kapsel oder Umhüllung weist das erste Aufbauteilstück eine Kontaktfläche auf, die bei auf den Pfosten montiertem Aufbauteil mit einer korrespondierenden Kontaktfläche des Pfostenteils in Kontakt tritt. Für eine besonders wirksame Dichtheit dieser Kontaktierung, die zur Bildung der gewünschten Kapselung vorgesehen ist, sind diese Kontaktflächen geeignet korrespondierend zueinander konisch ausgestaltet, so dass bei einer Montage des Aufbauteils durch geeignete Einpressung des Konus in Längsrichtung des Pfostenteils gesehen der gewünschte dichte Kontakt entsteht. Dazu ist das zweite Aufbauteilstück mit einem umlaufenden Verschlusskragen mit im wesentlichen konischer Außenfläche versehen, die zur Bildung der Kapsel mit einer korrespondieren Innenfläche des Pfostenteils in Kontakt bringbar ist. Eine besonders hohe Dichtigkeit ist dabei erreichbar, indem diese Innenfläche des Pfostenteils ihrerseits ebenfalls konisch ausgeführt ist.

Die gewünschte lediglich begrenzte Anzahl möglicher Orientierungen bei der Einbringung des Aufbauteils in das Pfostenteil ist in vorteilhafter Ausgestaltung erreichbar, indem die Innenkontur des Aufnahmekanals im Querschnitt eine dreizählige Symmetrie aufweist.

Die gewünschte mehrzählige Symmetrie der Innenkontur des Aufnahmekanals und daran angepasst der Außenkontur im entsprechenden Bereich des ersten Aufbauteilstücks ist in vorteilhafter Ausgestaltung auf besonders einfache Weise erreichbar, indem die Innenkontur des Aufnahmekanals im Querschnitt im wesentlichen polygonal, vorzugsweise als Sechskant, ausgeführt ist. In alternativer vorteilhafter Ausgestaltung ist die Innenkontur des Aufnahmekanals im Querschnitt im wesentlichen kreisförmig, ergänzt um eine Anzahl angeformter Nocken, ausgeführt.

Der funktionelle Ablauf bei der Einbringung des Zahnersatzes gliedert sich wie folgt:
Die Schritte nach der Insertion des Pfostenteils bis zur Modellherstellung vorzugsweise aus Gips bleiben wie oben beschrieben. Nun kann der Zahntechniker / Zahnarzt sich eine für die prothetische Gestaltung optimale rotatorische Position des Sekundäraufbauteils auf dem Primäraufbauteil wählen. Hat der Zahntechniker / Zahnarzt die optimale Position des Sekundäraufbauteils auf dem Primäraufbauteil gefunden, so kann er diese Position fixieren. Das bedeutet, dass nach dem Fixieren der Einzelelemente des mehrgeteilten Aufbauteils die restlichen prothetischen Komponenten gefertigt werden können, ohne dass sich eines der Elemente des mehrgeteilten Aufbauteils rotatorisch und oder translatorisch zu einem der anderen Element des mehrgeteilten Aufbauteils verschiebt. Folglich verhindert und/oder behindert die Fixierung die rotatorische und oder die translatorische Bewegungsfreiheit der einzelnen Elemente des mehrgeteilten Aufbauteils untereinander. Nach der Herstellung der prothetischen Komponenten erhält der Behandler das mehrgeteilte und intern fixierte Aufbauteil und die restlichen prothetischen Komponenten. Im Patientenmund kann der Behandler auf die durch die mehrzählige Symmetrie des Aufnahmekanals und des korrespondierenden Segments des ersten Aufbauteils gegebene Indizierung zwischen dem Pfostenteil und dem mehrgeteilten Aufbauteil zurückgreifen.

Es fällt dem Behandler sonst mit der Indizierung leicht, die gewünschte rotatorische Position des mehrgeteilten Aufbauteils zu ermitteln und das mehrgeteilte Aufbauteil als ganzes einzugliedern. Dies kann mittels einer Verbindungsschraube, einer Hemmung (vorzugsweise einer konischen Selbsthemmung), eines Gesperres, einer Rastung, einer Zementierung oder einer Verklebung erfolgen. Besonders vorteilhaft erweist sich, alle Elemente des mehrgeteilten Aufbauteils und das Pfostenteil mit einer gemeinsamen Verbindungsschraube zur montieren. D.h. dass die Verbindungsschraube das okklusal liegende Element des mehrgeteilten Aufbauteils über den Schraubenkopf oder ein Gewinde und über ein Gewinde im Pfostenteil mit dem Pfostenteil verspannt wird. Somit werden die restlichen Elemente des mehrgeteilten Aufbauteils zwischen dem dem okklusalen Element des mehrgeteilten Aufbauteils und dem Pfostenteil verspannt.

Ein Ausführungsbeispiel der Erfindung wird anhand einer Zeichnung näher erläutert. Darin zeigen:
- Fig. 1 bis 5: jeweils ein Dentalimplantat nach dem Stand der Technik,
- Fig. 6: ein erfindungsgemäßes Dentalimplantat im Längsschnitt,
- Fig. 7, 8: jeweils eine Explosionsdarstellung des Dentalimplantats gemäß Fig. 6, und
- Fig. 9: eine Anzahl von Querschnitten für einen Aufnahmekanal

Gleiche Teile sind in allen Figuren mit denselben Bezugszeichen versehen.

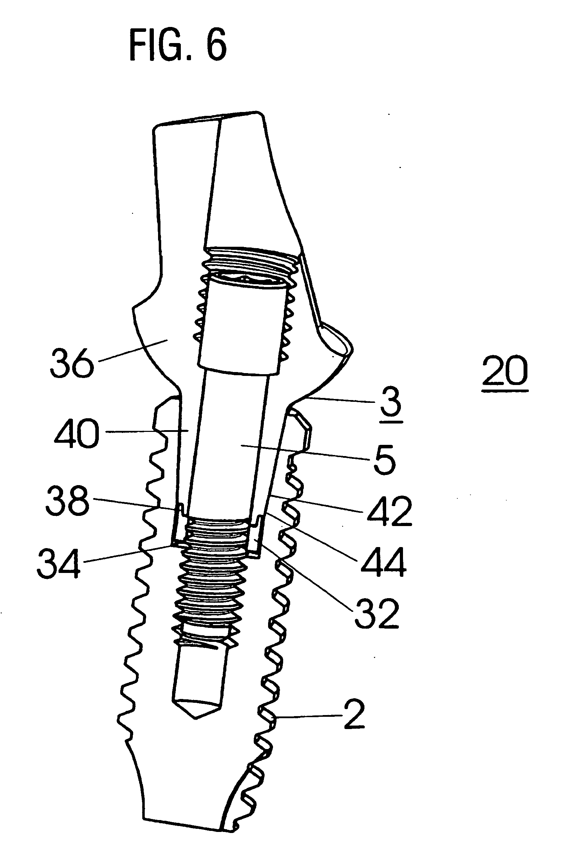

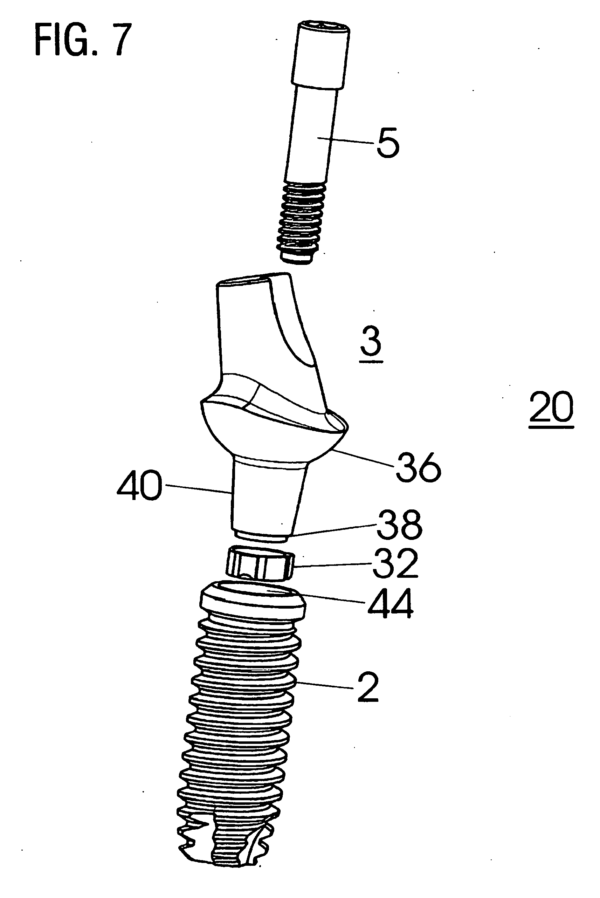

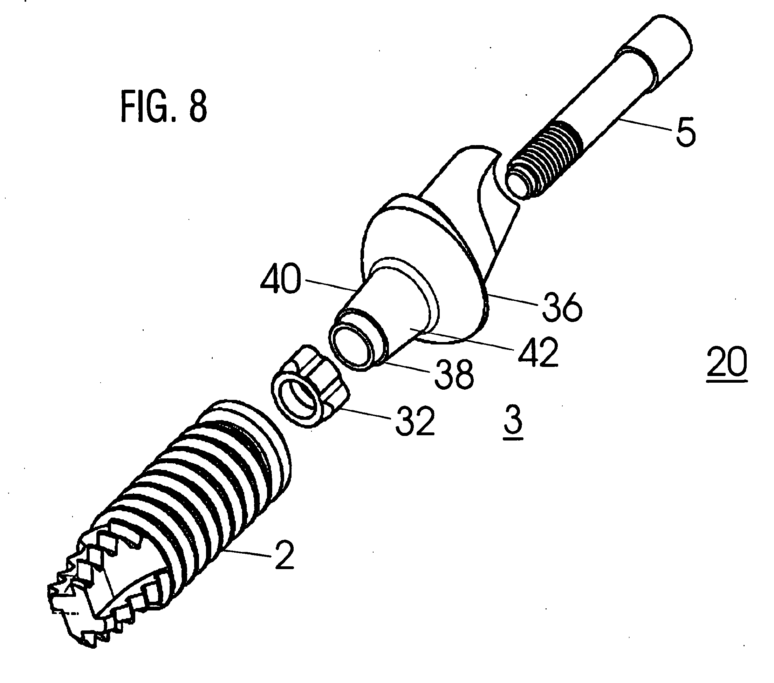

Die bekannten Dentalimplantate 1 gemäß den Fig. 1 bis 5 umfassen jeweils das in einen Kieferknochen einbringbare Pfostenteil 2 und ein diesem zugeordnetes Aufbauteil 3, an das ein Zahnersatzstück anbringbar ist. Im Gegensatz zu diesen bekannten Dentalimplantaten 1 ist das erfindungsgemäße Dentalimplantat 20 gemäß den Fig. 6 bis 8 gezielt dafür ausgelegt, die rotatorische Positionierung des oberen Implantataufbaus, insbesondere des anzubringenden Zahnersatzstücks, in Bezug auf die Längsachse des Pfostenteils 2 zwar grundsätzlich frei wählen zu können, diese aber in einem ersten Bearbeitungsschritt außerhalb des Patientenmundes und somit unabhängig vom eigentlichen Einsetzen des Implantats vornehmen zu können. Dabei ist angestrebt, dass ein Zahntechniker im Labor in der Art einer geeigneten Vorabanfertigung die rotatorische Einstellung der oberen Implantataufbaus abhängig von der zuvor vom Patientenmund abgenommenen und somit bedarfsgerecht ausgerichteten gewünschten Orientierung endgültig festlegt. Dabei sollen beim Einbringen des Implantats in den Patientenmund in der Art einer Indizierung nur noch eine geringe Anzahl von Positionierungen möglich sein, so dass der Zahnarzt beim Eingliedern des Zahnersatzes automatisch die richtige Positionierung wählt und somit ein aufwändiges Feinjustieren oder dergleichen während der Behandlung im Patientenmund nicht erforderlich ist. Zu diesem Zweck ist das Aufbauteil 3 des Dentalimplantats 20 zweigeteilt, wobei durch diese Zweiteilung die genannte Entkopplung der Bearbeitungsschritte erreicht werden soll.

Das Aufbauteil 3 des Dentalimplantats 20 umfasst dazu ein erstes Aufbauteilstück 32, das in Längsrichtung des Pfostenteils 2 gesehen in einen in diesem angeordneten Aufnahmekanal 34 einschiebbar ist. Das erste Aufbauteilstück 32 wird dabei in seinem Außenquerschnitt an den Innenquerschnitt des Aufnahmekanals 34 angepasst, wobei die Innenkontur des Aufnahmekanals 34 ebenso wie die daran angepasste Außenkontur des ersten Aufbauteilstücks 32 zur gewünschten Indizierung im Querschnitt eine mehrzählige Symmetrie aufweisen. Damit ist sichergestellt, dass das erste Aufbauteilstück 32 lediglich in einer begrenzten Anzahl von Orientierungen bezüglich seiner Einschubrichtung in den Aufnahmekanal 34 oder bezüglich der Längsrichtung des Pfostenteils 2 in den Aufnahmekanal 34 eingeschoben werden kann.

Um darüber hinaus aber auch die vorgelagerte freie rotatorische Ausrichtung des oberen Implantataufbaus sicherstellen zu können, umfasst das Aufbauteil 3 des Dentalimplantats 20 noch ein weiteres, zur Montage des Zahnersatzstückes vorgesehenes zweites Aufbauteilstück 36, das in einem Kontaktbereich 38 mit dem ersten Aufbauteilstück 32 in Kontakt bringbar ist. Der Kontakt soll dabei in der Art einer dauerhaften Verbindung in der Art einer Vormontage im Labor des Zahntechnikers erfolgen, so dass zur eigentlichen Herstellung des Kontakts ein geeignet gewähltes, eine dauerhafte und feste Verbindung gewährleistendes Verfahren vorgesehen ist. Im Ausführungsbeispiel ist dazu das erste Aufbauteilstück 32 als Klemmring ausgestaltet, der mit dem zweiten Aufbauteilstück 36 im Kontaktbereich 38 verspannbar ist. Die zur Bildung des Aufbauteils 3 vorgesehenen Aufbauteilstücke 32,36 sind dabei gezielt dafür ausgelegt, dass ihre Zusammenfügung unter frei wählbarer Positionierung oder Orientierung rotatorischen Ausrichtung des zweiten Aufbauteilstücks 36 in Relation zur durch die Außenkontur des ersten Aufbauteilstücks 32 gegebenen Indizierung erfolgen kann. Dazu sind das erste Aufbauteilstück 32 und das zweite Aufbauteilstück 36 im Kontaktbereich 38 jeweils mit kreisförmigem Querschnitt ausgeführt, so dass die gewünschte Verspannung oder Fixierung bei beiden Aufbauteilstücken 32,36 miteinander in jeder beliebigen Orientierung relativ zueinander vorgenommen werden kann.

Darüber hinaus ist das Dentalimplantat 20 auch noch gezielt dafür ausgelegt, dass in der Art einer geeigneten hermetischen Versiegelung der durch die Indizierungsmechanik und die dazu erforderlichen Komponenten gebildete Mechanismus für eine dauerhafte Nutzung frei von eindringenden Bakterien oder Verschmutzungen gehalten werden kann. Dazu ist das zweite Aufbauteilstück 36 in korrespondierender Ausgestaltung mit dem Pfostenteil 2 derart ausgeführt, dass bei der Endmontage, also beim Einbringen des aus den Aufbauteilstücken 32,36 zusammengesetzten Aufbauteils 3 in das Pfostenteil 2, in der Art einer Kapselung oder Umhüllung eine bakteriendichte Ummantelung der genannten Indizierungsmechanik entsteht. Dazu umfasst das zweite Aufbauteilstück 36 einen umlaufenden Verschlusskragen 40 mit im Wesentlichen konischer Außenfläche 42, die zur Bildung der das erste Aufbauteilstück 32 umschließenden Kapsel mit einer korrespondierenden Innenfläche 44 des Pfostenteils 2 in Kontakt bringbar ist. Wie sich überraschenderweise herausgestellt hat, bewirkt nämlich gerade die konische Ausgestaltung der genannten Kontaktflächen, dass beim eingebrachten Aufbauteil 3 die gewünschte bakteriendichte Verbindung entsteht. Zur endgültigen Fixierung ist das zweite Aufbauteilstück 36 mit einem Schraubenkanal versehen, durch den die Verbindungsschraube 5 zur festen Verschraubung mit dem Pfostenteil 2 hindurchgeführt ist.

Im Ausführungsbeispiel weist die Innenkontur des Aufnahmekanals 34 im Querschnitt eine dreizählige Symmetrie auf. Dazu ist die Innenkontur des Aufnahmekanals 34 - ebenso wie die korrespondierende Außenkontur des ersten Aufbauteilstücks 32 - im Wesentlichen kreisförmig ausgeführt und um eine Anzahl angeformter Nocken 46 ergänzt.

Die Arbeitsschritte zur Einbringung des Dentalimplantats 20 können wie folgt zusammengefasst werden:
In einem ersten Arbeitsschritt erfolgt die Einbringung des Implantats über ein geeignetes, an sich bekanntes manuelles oder maschinelles Verfahren. Anschließend wird eine einteilige Einheilschraube chirurgisch eingebracht und das Implantat anschließend verschlossen. Des Weiteren erfolgt in einem nachgeordneten Schritt chirurgisch die Ausformung des Weichgewebes für die später vorgesehene prothetische Situation.

Mit dieser chirurgischen Vorbehandlung im Mundraum des Patienten wird unter Rückgriff auf Standardmethoden eine Abformung der Mund- oder Zahnsituation hergestellt, auf deren Grundlage, Art, Form und Ausrichtung des zu erstellenden Zahnersatzstücks ermittelt und vorgegeben werden können. Auf dieser Grundlage wird durch einen Zahntechniker ein Gipsmodell der herzustellenden Zahnsitutation erstellt.

Auf dieser Grundlage wird vom Zahntechniker im Labor das Dentalimplantat 20 vorbereitet, wobei zunächst das innenseitig als Klemmring ausgestaltete erste Aufbauteilstück 32 in den Aufnahmekanal eines Laboranalogons des Dentalimplantats 20 im bereits erstellten Gipsmodell eingelegt wird. Anschließend wird das zweite Aufbauteilstück 36 ebenfalls eingelegt und im Hinblick auf die gewünschte Zahnsituation geeignet ausgerichtet, wobei noch keine endgültige Fixierung mit dem ersten Aufbauteilstück 32, sondern lediglich eine vorläufige Fixierung vorgenommen wird. Unter Rückgriff auf standardisierte Prozesse auf der Basis allgemeiner zahntechnischer Standards werden sodann die eigentlichen Zahnersatzstücke, also die Prothetik, die Kronen oder die Brücken, angefertigt und am zweiten Aufbauteilstück 36 angebracht. Danach erfolgt die korrekte und endgültige Ausrichtung des zweiten Aufbauteilstücks 36 in Relation zum ersten Aufbauteilstück 32 in rotatorischer Hinsicht. Anschließend wird eine der Verbindungsschraube 5 analoge Halteschraube in ein zugeordnetes Gewinde im dem Pfostenteil 2 analogen Unterbau im Gipsmodell eingeschraubt, wobei über den Schraubenkopf das zweite Aufbauteilstück 36 in axialer Richtung der Schraube mit dem ersten Aufbauteilstück 32 verklemmt wird. Durch die konische Ausgestaltung der im Querschnitt kreisförmigen Kontaktfläche 38 zwischen dem ersten Aufbauteilstück 32 und dem zweiten Aufbauteilstück 36 erfolgt hierbei eine Einpressung des zweiten Aufbauteilstücks 36 in das erste Aufbauteilstück 32 und damit eine Verklemmung des ersten Aufbauteilstücks 32 mit dem zweiten Aufbauteilstück 36. Die Selbsthemmung des Konus sorgt dabei für eine definitive Fixierung der Aufbauteilstücke 32,36 miteinander.

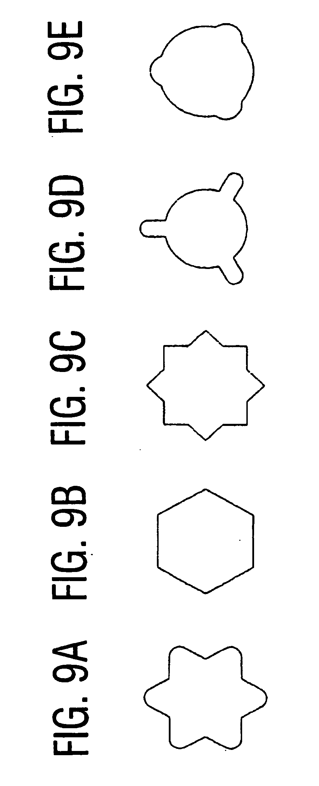

Anschließend wird das solchermaßen durch feste Verbindung oder Verklemmung der Aufbauteilstücke 32,36 miteinander hergestellte Aufbauteil 3 mitsamt dem daran bereits angebrachten Zahnersatz aus dem Gipsmodell herausgelöst. In einem nachfolgenden Behandlungsschritt erfolgt sodann die Einbringung des Aufbauteils 3 in den Patientenmund durch Einschub und Verbindung mit dem bereits vorhandenen Pfostenteil 2. Durch die durch das erste Aufbauteilstück 32 bewirkte Indizierung oder Vorpositionierung kann dabei aufwändiges Feinjustieren der rotatorischen Orientierung während der Behandlung im Patientenmund entfallen. Eine Anzahl möglicherweise geeigneter Querschnittsgeometrien für den Aufnahmekanal 34 und die damit korrespondierende Außenkontur des als Klemmring ausgestaltete ersten Aufbauteilstücks 32 zeigt Fig. 9. Insbesondere der Ausgestaltung gemäß Fig. 9 d) oder 9 e) ist dabei entnehmbar, dass diese Kontur im wesentlichen kreisförmig mit einer Anzahl angeformter Nocken 46 ausgefüllt sein kann.

## Patentansprüche

1. Dentalimplantat (1) mit einem in einen Kieferknochen einbringbaren Pfostenteil (2) und mit einem diesem zugeordneten Aufbauteil (3), an das ein Zahnersatzstück anbringbar ist, wobei das Aufbauteil (3) mehrstückig ausgeführt ist und zusätzlich zu einem ersten Aufbauteilstück (32), das in Längsrichtung des Pfostenteils (2) gesehen in einen in diesem angeordneten Aufnahmekanal (34) einschiebbar ist, ein zur Montage des Zahnersatzstückes vorgesehenes zweites Aufbauteilstück (36) umfasst, das mit dem ersten Aufbauteilstück (32) in einem Kontaktbereich (38) mit im Wesentlichen kreisförmigem Querschnitt formschlüssig in Kontakt bringbar ist, wobei die Innenkontur des Aufnahmekanals (34) ebenso wie die daran angepasste Außenkontur des ersten Aufbauteilstücks (32) im Querschnitt eine ein- oder mehrzählige Symmetrie aufweisen,
**dadurch gekennzeichnet, dass**
das zweite Aufbauteilstück (36) einen umlaufenden Verschlusskragen (40) mit im Wesentlichen konischer Außenfläche (42) aufweist, die zur Bildung einer das erste Aufbauteilstück (32) umschließenden Kapsel mit einer korrespondierenden konischen Innenfläche des Pfostenteils (2) in Kontakt bringbar ist.

2. Dentalimplantat (1) nach Anspruch 1, bei dem die Innenkontur des Aufnahmekanals (34) im Querschnitt eine dreizählige Symmetrie aufweist.

3. Dentalimplantat (1) nach einem der Ansprüche 1 oder 2, bei dem die Innenkontur des Aufnahmekanals (34) im Querschnitt im Wesentlichen polygonal ausgeführt ist.

4. Dentalimplantat (1) nach einem der Ansprüche 1 oder 2, bei dem die Innenkontur des Aufnahmekanals (34) im Querschnitt im Wesentlichen kreisförmig, ergänzt um eine Anzahl angeformter Nocken (46), ausgeführt ist.

## Claims

1. A dental implant (1) having a post part (2) to be introduced into a jaw bone and having a mounting part (3) associated therewith, onto which a dental prosthesis piece can be mounted, the mounting part (3) being designed in multiple pieces and comprising, in addition to a first mounting part piece (32), which, viewed in longitudinal direction of the post part (2), can be pushed into a receiving channel (34) arranged therein, a second mounting part piece (36), which is provided for mounting the dental prosthesis part and which can be brought into form-locking contact with the first mounting part piece (32) in a contact area (38) with a substantially circular cross-section, wherein the cross-section of the inner profile of the receiving channel (34) as well as the cross-section of the outer profile, adapted thereto, of the first mounting part piece (32) have a single or multifold symmetry, **characterized in that** the second mounting part piece (36) includes a peripheral sealing collar (40) with a substantially conical outer surface (42), which can be brought into contact with a corresponding conical inner surface of the post part (2) for forming a capsule enclosing the first mounting part piece (32).

2. The dental implant (1) of claim 1, wherein the cross-section of the inner profile of the receiving channel (34) has a triple symmetry.

3. The dental implant (1) of claim 1 or 2, wherein the cross-section of the inner profile of the receiving channel (34) is substantially polygonal

4. The dental implant (1) of claim 1 or 2, wherein the cross-section of the inner profile of the receiving channel (34) is substantially circular, supplemented by a number of molded-on cam lobes (46).

## Revendications

1. Implant dentaire (1) ayant un élément de poteau (2) à être introduit dans un os maxillaire et ayant un élément de montage (3) y affecté, auquel une pièce de prothèse dentaire peut être fixée, l'élément de montage (3) étant configuré en plusieurs pièces et comprenant, en plus d'une première pièce d'élément de montage (32), qui, vu en direction longitudinale de l'élément de poteau (2), peut être poussée dans un conduit de réception (34) disposé là-dedans, une seconde pièce d'élément de montage (36), qui est prévu pour monter la pièce de prothèse dentaire et qui peut être mise en contact à engagement positif avec la première pièce d'élément de montage (32) dans une zone de contact (38) avec une section essentiellement circulaire, la section du contour intérieur du conduit de réception (34) ainsi que la section du contour extérieur, adaptée à celle-ci, de la première pièce d'élément de montage (32) ayant une symétrie simple ou une symétrie multiple, **caractérisé en ce que** la seconde pièce d'élément de montage (36) comprend un collet de fermeture (40) périphérique avec une face extérieure (42) essentiellement conique qui peut être mise en contact avec une face intérieure conique correspondante de l'élément de poteau (2) pour former une capsule entourant la première pièce d'élément de montage (32).

2. Implant dentaire (1) selon la revendication 1, dans lequel la section du contour intérieur du conduit de réception (34) a une symétrie triple.

3. Implant dentaire (1) selon la revendication 1 ou 2, dans lequel la section du contour intérieur du conduit de réception (34) est essentiellement polygonale.

4. Implant dentaire (1) selon la revendication 1 ou 2, dans lequel la section du contour intérieur du conduit de réception (34) est essentiellement circulaire, supplémentée par un nombre de cames (46) moulées là-dessus.
